# EUROPÄISCHE PATENTSCHRIFT

(11) **EP 4 477 722 B1**
(45) Veröffentlichungstag und Bekanntmachung des Hinweises auf die Patenterteilung: **07.05.2025**
(21) Anmeldenummer: 23179561.8
(22) Anmeldetag: 15.06.2023
(51) Int. Cl.: C09J 7/38, C09J 4/00, C08J 7/18

(54) **VERFAHREN ZUR HERSTELLUNG EINES HAFTKLEBEBANDS MIT EINER POLYMERBASIERTEN HAFTKLEBESCHICHT**
METHOD FOR PRODUCING A PRESSURE-SENSITIVE ADHESIVE TAPE WITH A POLYMER-BASED PRESSURE-SENSITIVE ADHESIVE LAYER
PROCÉDÉ DE FABRICATION D'UNE BANDE ADHÉSIVE SENSIBLE À LA PRESSION COMPRENANT UNE COUCHE ADHÉSIVE SENSIBLE À LA PRESSION À BASE DE POLYMÈRE

(43) Veröffentlichungstag der Anmeldung: 18.12.2024
(73) Patentinhaber: Astorplast Klebetechnik GmbH, 73553 Alfdorf (DE)
(72) Erfinder: STAMPFER, Stefan, 73614 Schorndorf (DE)
(74) Vertreter: Patentanwälte Bauer Vorberg Kayser

(56) Entgegenhaltungen:
- DE-A1- 1 594 193
- DE-A1- 10 237 950
- MYMINICRAFT: "CURE UV RESIN FASTER, WITH WATER", 17 May 2020 (2020-05-17), XP093098147, Retrieved from the Internet <URL:https://www.youtube.com/watch?v=IdxeKq70P7U> [retrieved on 20231105]

## Beschreibung

Die Erfindung betrifft ein Verfahren zum Herstellen eines Haftklebebands.

Aus der US 4,181,752 ist ein Verfahren zum Herstellen eines Haftklebeband bekannt, bei dem eine Haftklebemasse bereitgestellt wird, die durch UV-Strahlung polymerisierbare Acrylat-Monomere und einen Fotoinitiator aufweist. Auf einer Oberseite eines bandförmigen Trägers wird die Haftklebemasse aufgetragen und in einen sogenannten Trockenkanal transportiert. In dem Trockenkanal wird die Haftklebemasse der UV-Strahlung ausgesetzt, was zu einer Polymerisation der Acrylat-Monomere führt. Da die Polymerisationsreaktion unter Ausschluss von Sauerstoff erfolgen muss, ist es notwendig, die Polymerisation in einer mit Inertgas gefüllten Kammer stattfinden zu lassen. Dies ist mit einem gewissen Aufwand verbunden: Zum einen muss ein Inertgas (beispielsweise Stickstoff) bereitgestellt werden. Zum anderen muss die Kammer, insbesondere dort, wo der Träger in die Kammer tritt und aus dieser wieder heraustritt) gut abgedichtet sein.

Bei der Polymerisation handelt es sich um eine exotherme Reaktion, bei der viel Wärme entsteht. Üblicherweise wird dabei die Wärme abgeleitet, damit die Reaktion auf einem präferierten Temperaturniveau mit entsprechenden Umsetzungsraten abläuft. Außerdem neigen viele Monomere bei zu hohen Temperaturen während der Reaktion zum Ausdampfen, wodurch der Trockenkanal erheblich verschmutzt werden kann. Ebenso schränkt die entstehende Wärme die Verwendung auf temperaturstabile Träger bzw. sogenannte Prozessliner ein. Da in der Endanwendung des Haftklebebands oftmals Trägermaterialien oder Abdeckungen vom Endkunden gefordert werden, die nicht die bei der Herstellung erforderliche Temperaturstabilität aufweisen, ist man gezwungen, im Herstellverfahren die Prozessliner einzusetzen. Dies führt zu höheren Kosten und zu höherem Aufwand, da im Anschluss an die Beschichtung bzw. Polymerisation dann die polymerisierte Haftklebemasse auf einen anders gearteten Träger oder Liner übertragen werden muss.

Aus dem Stand der Technik ist bekannt, das Inertgas und/oder die Kontaktflächen (Rollen, Walzen, Bänder etc.) zu kühlen, mit denen der Träger während seines Transports durch den Trockenkanal in Berührung kommt. Auch können Kühlplatten etc. zum Einsatz kommen, an denen der Träger vorbeistreicht und über den Kontakt Wärme abgibt. Die Kühlung durch Inertgas ist aufwändig, da eine intensive Wärmeübertragung zwischen Haftklebemasse und Inertgas nicht ohne Weiteres möglich ist. Der Einsatz von zusätzlichen kühlenden Kontaktflächen führt zu einer höheren Reibung beim Transport des Trägers.

Aus der DE 1 594 193 A1 ist ebenfalls ein Verfahren zur Herstellung eines Haftklebeband mit einer UV-polymerisierbaren Acrylat-Haftklebemasse und einem bahnförmigen Träger bekannt, bei der die Haftklebemasse mit Quecksilber in einem Quecksilberbeckens in Kontakt kommt. Die UV-Bestrahlung der Haftklebemasse erfolgt dabei von oben durch den Träger, der entsprechend UV-durchlässig sein muss. Das Quecksilber dient einerseits als Kühlmittel und andererseits als Reflektor für die UV-Strahlen. Quecksilber ist jedoch giftig, sodass das Vorhalten eines Quecksilberbeckens und der Umgang mit Quecksilber schwierig ist.

Die DE 103 37 950 A1 betrifft ein Verfahren zur Herstellung von Polyacrylatschmelzhaftklebern, bei dem ein Polymerisat mit einem Photobasenerzeuger im Heißschmelzverfahren auf einen Träger aufgetragen wird. Während oder nach dem Auftragen wird das Polymerisat mit UV-Licht bestrahlt, wodurch photochemisch eine Base erzeugt wird. Die Masse wird anschließend thermisch durch Reaktion mit in dem Polymerisat befindlichen funktionellen Gruppen und dem durch die Base gebildeten Vernetzermolekül vernetzt. Für die Vernetzungsreaktion wird neben der UV-Bestrahlung auch Wasser benötigt.

Der Erfindung liegt daher die Aufgabe zu Grunde, ein Verfahren zur Herstellung eines Haftklebebands bereitzustellen, welches einfach und kosteneffizient durchgeführt werden kann.

Die der Erfindung zu Grunde liegende Aufgabe wird mit der Merkmalskombination gemäß Anspruch 1 gelöst. Bevorzugte Ausführungsbeispiele können den Unteransprüchen zu Anspruch 1 entnommen werden.

Erfindungsgemäß ist vorgesehen, dass der Trockenkanal einen Hauptabschnitt umfasst, der ein mit Wasser gefülltes Wasserbecken und wenigstens eine Strahlungsquelle aufweist, wobei der Träger durch das Wasserbecken geführt wird, sodass die auf der Oberseite des Trägers aufgetragene Haftklebemasse während der Bestrahlung direkten Kontakt zu dem Wasser hat, und wobei die Strahlung der Strahlungsquelle durch das Wasser im Wasserbecken erfolgt.

Mit dem erfindungsgemäßen Verfahren können die Nachteile aus dem Stand der Technik vermieden oder gemindert werden. Die Abfuhr der bei der Polymerisation entstehenden Wärme erfolgt durch das Wasser. Durch den direkten Kontakt mit der Haftklebemasse und seiner hohen Wärmekapazität lässt sich in effizienter Weise durch das Wasser Wärme von der Haftklebemasse abführen. Dadurch kann vermieden werden, dass die Haftklebemasse oder der anliegende Träger zu heiß werden. Entsprechend können bei der Auswahl des Trägermaterials auch temperatursensible Materialen ausgewählt werden, die für die Endanwendung besonders geeignet sind und oder kostengünstig bereitgestellt werden können. Durch die effektive Kühlung durch das Wasser entfällt die Notwendigkeit, einen (besonders temperaturbeständigen) Prozessliner einzusetzen, der nach erfolgter Polymerisation der Haftklebemasse durch einen Liner/Träger für die Endanwendung ersetzt werden muss. Die effiziente Kühlung durch den direkten Kontakt zwischen Haftklebemasse/Wasser ermöglicht den Einsatz eines Trägers, der für die Endanwendung maßgeschneiderte Eigenschaften aufweist und auch schon in dem Herstellprozess des Haftklebebands verwendet werden kann. Die Haftklebemasse und/oder der Träger können nun temperatursensitive Zusätze oder Inhaltsstoffe wie Duftstoffe und Medikamente aufweisen.

Zudem erweist sich das Wasser als effizienter Inhibitor für den Luftsauerstoff. Es hat sich überraschend herausgestellt, dass der im Wasser physikalisch gebundene Sauerstoff praktisch keinen nachteiligen Einfluss auf die Polymerisation der Haftklebemasse hat. Die Haftklebemasse, die bei der Bestrahlung polymerisiert, wird auf der dem Wasser zugeneigten Seite durch das Wasser und auf der dem Träger zugeneigten Seite durch das Trägermaterial von dem Luftsauerstoff abgeschirmt. Für das erfindungsgemäße Verfahren ist somit, zumindest im Hauptabschnitt des Trockenkanals mit dem Wasserbecken, der Einsatz eines Inertgases nicht zwingend notwendig. Auch kann auf Kühlplatten oder dergleichen verzichtet werden, sodass der Transport des Trägers durch den Hauptabschnitt des Trockenkanals weniger reibungsbehaftet ist. Soweit ein etwaiger Einfluss des im Wasser physikalisch gebundenen Sauerstoffs auf die Polymerisation doch festgestellt wird, kann das Wasser inertisiert werden, indem das Wasser beispielsweise mit Stickstoff behandelt wird.

In einem Ausführungsbeispiel wird im Hauptabschnitt der Träger entlang einer Wasseroberfläche des Wasserbeckens geführt, wobei die Oberseite mit der aufgetragenen Haftklebemasse nach unten gerichtet ist. Der Träger mit der Haftklebemasse kann dabei auf dem Wasser schwimmen oder auch vollständig im Wasser eingetaucht sein. Das Wasserbecken kann dabei sehr flach ausgebildet sein, d. h. eine Wassertiefe T im Wasserbecken kann wesentlich kleiner sein als eine Länge L des Wasserbeckens in Transportrichtung des Trägers. Entsprechend ist das Verhältnis V aus Länge L zu Tiefe T groß. Das Verhältnis V gleich L/T kann größer als 10, vorzugsweise größer als 20 oder gar größer als 30 sein. Die Wassertiefe T kann beispielsweise 0,5 bis 50 cm oder bevorzugt 1 bis 30 cm betragen. Die Länge des Wasserbeckens kann 1 m bis 150 m, bevorzugt 5 bis 100 m betragen. Eine Breite B des Wasserbeckens (quer zur Transportrichtung des Trägers) kann sich an der Breite des zu beschichtenden Trägers orientieren. Die Breite B kann in einem Bereich zwischen 20 und 300 cm, bevorzugt zwischen 50 und 200 cm liegen.

In einem Ausführungsbeispiel erfolgt die Bestrahlung der Haftklebemasse ausschließlich durch das Wasser im Wasserbecken. Es ist daher hier nicht notwendig, dass das Trägermaterial durchlässig für die elektromagnetische Strahlung ist. Entsprechend muss bei der Auswahl des Trägermaterials und bei der Festlegung der Schichtdicke des Trägermaterials grundsätzlich keine Rücksicht auf die Strahlungsdurchlässigkeit des Trägers genommen werden. Jedoch ist in einem alternativen Ausführungsbeispiel vorgesehen, dass im Hauptabschnitt die Bestrahlung der Haftklebemasse nicht nur durch das Wasser von unten, sondern auch von oben durch den Träger erfolgt. In diesem Fall muss das Trägermaterial so gewählt sein, dass es für die elektromagnetische Strahlung durchlässig ist.

Das nach dem erfindungsgemäßen Verfahren hergestellte Haftklebeband muss nicht notwendigerweise in seiner Endanwendung den Träger beinhalten, der für die Herstellung des Haftklebebands eingesetzt wird. Beispielsweise kann es sich bei dem Haftklebeband um ein doppelseitiges Haftklebeband handeln, welches nur die aus der Haftklebemasse gebildete Haftklebeschicht aufweist. In der Haftklebeschicht kann dabei ein Gelege oder Gewebe eingebettet sein, das der Haftklebeschicht eine gewisse Stabilität verleiht. Auch kann es sich bei dem in der Herstellung eingesetzten Träger nur um einen Prozessliner handeln, der nach der Polymerisation der Haftklebemasse durch einen Träger für die Endanwendung ersetzt werden kann.

Bei dem Haftklebeband kann es sich auch um ein Produkt mit mehreren Haftklebeschichten handeln, von denen wenigstens eine Haftklebeschicht aus der polymerisierten Haftklebemasse gebildet worden ist. Beim erfindungsgemäßen Verfahren können auch eine erste Haftklebemasse auf den Träger aufgetragen und polymerisiert und danach eine zweite Haftklebemasse auf die erste Haftklebemasse oder auf die andere Seite des Trägers aufgetragen werden. In einem Ausführungsbeispiel wird ein einseitiges Haftklebeband mit einem Träger hergestellt, der in seiner Endanwendung an der Haftklebemasse bzw. Haftklebeschicht verbleibt.

Es handelt sich bei den Monomeren um Acrylat-Monomere. Die Haftklebemasse kann ein Gemisch aus Monomeren und einem und mehreren Stoffen sein, die aus der Gruppe der Verdicker, Oligomere, Füllstoffe (insbesondere Mikrohohlglaskugeln), Harze, Farbstoffe, Stabilisatoren und Vernetzer ausgewählt sind.

Bei der Haftklebemasse handelt es sich um ein Gemisch aus Acrylat-Monomere und Acrylat-Polymere, wobei eine gewisse Vorpolymerisation schon vor dem Trockenkanal, insbesondere vor dem Auftragen der Haftklebemasse auf dem Träger, stattgefunden hat. Die Vorpolymerisation kann dabei in
einem Reaktor erfolgen, der vorzugsweise mit einem Inertgas beaufschlagt ist. Wenn das Gemisch eine bestimmte Viskosität erreicht hat, wird in einem Ausführungsbeispiel die Polymerisation im Reaktor abgebrochen, sodass die Haftklebemasse im noch fließfähigen Zustand auf den Träger aufgetragen werden kann. Dabei kann ein Auftragswerk mit einem Balkenrakel zum Einsatz kommen, durch den die Haftklebemasse mit einer bestimmten Schichtdicke über die Breite des Trägers aufgetragen wird. Die bevorzugte Schichtdicke der Haftklebemasse beträgt, unabhängig von der Art der Auftragung, 5 bis 5000 µm. In einem Ausführungsbeispiel beträgt die Schichtdicke 20 bis 200 µm.

Die Vorpolymerisation im Reaktor kann auch ohne Mitwirkung von elektromagnetischer Strahlung erfolgen, indem die Temperatur der Haftklebemasse einen bestimmten Schwellenwert überschreitet. Es ist daher denkbar, den für die Bestrahlung im Trockenkanal benötigten Fotoinitiator erst der Haftklebemasse beizugeben, wenn die Vorpolymerisation im Reaktor abgeschlossen ist bzw. kurz bevor die Haftklebemasse auf den Träger aufgetragen wird.

In dieser Stelle sei darauf hingewiesen, dass die Haftklebemasse durch die elektromagnetische Strahlung ihre physikalische Eigenschaften (zum Beispiel ihre Viskosität) und auch ihre chemische Zusammensetzung (zum Beispiel sinkt der Anteil der Monomere durch die Bestrahlung) ändert. Sowohl für die Haftklebemasse vor der Bestrahlung, für alle Zwischenstadien während der Bestrahlung als auch für die auspolymerisierte Haftklebemasse nach erfolgter Bestrahlung wird hier jeweils die gleiche Begrifflichkeit verwendet.

Nach erfolgter Bestrahlung im Hauptabschnitt kann der Anteil der Monomere an dem Gesamtgewicht der Haftklebemasse kleiner als 5 %, vorzugsweise kleiner als 3 % sein.

Die wenigstens eine Strahlungsquelle des Hauptabschnitts des Trockenkanals kann innerhalb des Wasserbeckens angeordnet sein. Dadurch ist es möglich, dass der Abstand zwischen der Schicht der Haftklebemasse und der Strahlungsquelle kleiner als die Tiefe des Wasserbeckens ist. Alternativ ist es möglich, dass die Strahlungsquelle außerhalb des Wasserbeckens, beispielsweise unterhalb eines Bodens des Wasserbeckens angeordnet ist. Der Boden des Wasserbeckens ist dabei aus einem Material, welche für die elektromagnetische Strahlung durchlässig ist. Auch ist denkbar, dass zumindest ein Teil der Strahlung durch strahlungsdurchlässige Seitenwände des Wasserbeckens erfolgt. Der Boden und/oder die Seitenwände des Wasserbeckens können aus beliebigem wasserundurchlässigen und strahlungsdurchlässigen Material wie Glas oder Polymethylmethacrylat (Plexiglas) sein. Oberhalb und/oder unterhalb des Beckens können Reflektoren oder reflektierendes Material vorgesehen sein.

Bei Verwendung mehrerer Strahlungsquellen im Hauptabschnitt können alle Strahlungsquellen im Wasserbecken oder alle Strahlungsquellen außerhalb des Wasserbeckens angeordnet sein. Auch ist es möglich, dass ein Teil der Strahlungsquellen im Wasserbecken und ein anderer Teil der Strahlungsquellen außerhalb des Wasserbeckens angeordnet sind.

In einem Ausführungsbeispiel beträgt die Wellenlänge der elektromagnetischen Strahlung 100 bis 800 nm. Bevorzugt wird als Strahlung eine UV-Strahlung mit einer Wellenlänge von 200 bis 400 nm verwendet (beispielsweise UV-A mit einer Wellenlänge von 380 bis 315 nm, UV-B mit einer Wellenlänge von 315 bis 280 nm oder UV-C mit einer Wellenlänge von 280 bis 100 nm). Als Strahlungsquelle kann eine Quecksilberdampflampe oder eine LED verwendet werden. Auch ist es denkbar, eine Strahlungsquelle vorzusehen, die Licht mit einer Wellenlänge von 400 bis 470 nm emittiert.

Nach dem Hauptabschnitt kann eine Trocknungseinheit vorgesehen sein, durch die der bandförmige Träger und die Haftklebemasse von anhaftendem Restwasser aus dem Wasserbecken getrennt wird. Die Trocknungseinheit kann ein Trockengebläse aufweisen, sodass anhaftende Wassertropfen weggeblasen werden bzw. verdunsten. Die Trocknungseinheit kann zusätzlich oder alternativ einen Infrarot-Strahler oder andere dem Fachmann bekannte Mittel zur Trocknung aufweisen.

Die Temperatur des Wassers im Wasserbecken kann geregelt sein, wobei ein Sollwert des Wassers 0°C bis 90°C vorzugsweise 10°C bis 75°C beträgt. Mit der Wassertemperatur kann gezielt Einfluss auf die Temperatur bzw. den Temperaturverlauf in der Haftklebemasse genommen werden, wobei ein höheres Temperaturniveau in der Haftklebemasse zu höheren Polymerisationsraten führt. Durch die Wassertemperatur kann somit - neben der Strahlungsleistung der Strahlungsquelle und dem Abstand zwischen Strahlungsquelle und Haftklebemasse sowie der Bahngeschwindigkeit - der Reaktionsverlauf der Polymerisation beeinflusst werden.

Als Wasser im Wasserbad kann demineralisiertes Wasser verwendet werden. Dem Wasser im Wasserbad kann ein Puffersystem zugesetzt sein, um den pH-Wert des Wassers konstant zu halten. Durch den direkten Kontakt mit der Haftklebemasse können Ausscheidungen oder Reaktionsprodukte von der Haftklebmasse in das Wasser gelangen, die den pH-Wert verändern. Das Puffersystem hält dabei den pH-Wert im gewünschten Bereich. Ein bevorzugter pH-Wert liegt in einem Bereich von 5,5 bis 7.

Das Wasser im Wasserbecken kann durch eine Filtereinheit gefiltert werden. Die Filtereinheit kann einen aktiven Kohlefilter und/oder einen Schwebepartikelfilter umfassen. Die Filterung kann mit Hilfe einer Umwälzpumpe erfolgen.

Dem Wasser im Wasserbecken können Biozide zugemischt sein, um unerwünschte Schadorganismen im Wasser abzutöten. Alternativ oder zusätzlich kann UV-C Strahlung zur Abtötung von Schadorganismen (zum Beispiel Keime) eingesetzt werden.

In einem Ausführungsbeispiel wird der Träger mit der aufgetragenen Haftklebemasse durch einen Vorabschnitt des Trockenkanals transportiert, der dem Hauptabschnitt vorgelagert ist. In dem Vorabschnitt kann der Träger mit der aufgetragenen Haftklebemasse einer weiteren Strahlungsquelle ausgesetzt werden. Die Bestrahlung im Vorabschnitt dient dazu, die Viskosität der Haftklebemasse und deren Haftung an dem Träger so weit zu erhöhen, dass Träger und Haftklebemasse in das Wasserbecken des Hauptabschnitts geführt werden können, ohne dass dabei die Haftklebemasse oder Teile davon sich vom Träger lösen oder dass die Haftklebemasse durch den Kontakt mit dem Wasser zu Schaden kommt. Der bandförmige Träger wird somit zuerst durch den Vorabschnitt und dann durch den Hauptabschnitt des Trockenkanals geleitet.

Das Wasser im Wasserbad kann insbesondere an der Stelle, an der der Träger mit der Haftklebemasse erstmalig in Kontakt tritt, durch geeignete Mittel eine reduzierte Oberflächenspannung aufweisen. Das Wasser kann an der betreffenden Stelle beispielsweise aufgewirbelt sein oder mit einem feinen Sprühregen besprüht werden.

Der Vorabschnitt kann eine Kammer mit einem Inertgas wie beispielsweise Stickstoffaufweisen, sodass ein direkter Kontakt zwischen der Haftklebemasse und Luftsauerstoff bei der Polymerisation der Haftklebemasse im Vorabschnitt vermieden wird.

Ein Verhältnis der in dem Hauptabschnitt eingesetzten Strahlungsenergie zu der in dem Vorabschnitt eingesetzten Strahlungsenergie kann größer als 1, vorzugsweise größer als 2 oder größer als 4 sein. Somit findet die Polymerisation der Haftklebemasse hauptsächlich in dem Hauptabschnitt statt. Dort muss dann auch der größte Anteil der bei der Polymerisation in der Haftklebemasse entstehenden Wärme abgeführt werden, was durch den direkten Kontakt mit dem Wasser und der hohen Wärmekapazität von Wasser gut möglich ist. Eine Kühlung im Vorabschnitt kann aufgrund der dort weniger anfallenden Wärme kleiner ausgelegt werden oder gar gänzlich entfallen. Beispielsweise kann die Kühlung im Vorabschnitt eine Kühlplatte umfassen, die unterhalb des Trägers angeordnet ist und in Kontakt mit der Unterseite des Trägers steht, wenn dieser durch den Vorabschnitt des Trockenkanals bewegt wird. Somit kann die Temperatur des Trägers und der aufgetragenen Haftklebemasse auf einem Niveau gehalten werden, bei dem insbesondere das Trägermaterial nicht beeinträchtigt wird.

Die Haftklebemasse kann unmittelbar vor dem Transport durch den Vorabschnitt auf den Träger aufgetragen werden. Das oben bereits erwähnte Auftragswerk ist somit in unmittelbarer Nähe zum Vorabschnitt angeordnet.

Eine Bahngeschwindigkeit, mit der der Träger durch den Hauptabschnitt transportiert wird, kann 1 bis 100 m/min, 2 bis 70 m/min oder bevorzugt 3 bis 50 m/min betragen.

Eine Transportrichtung des Trägers durch den Hauptabschnitt und eine Transportrichtung des Trägers durch den Vorabschnitt können im Wesentlichen entgegengesetzt sein. In einem Ausführungsbeispiel wird der mit der Haftklebemasse beschichtete Träger mit seiner Oberseite nach oben in horizontaler Richtung durch den Vorabschnitt geführt. Danach wird der Träger um 180° umgelenkt, wobei die Umlenkung in mehreren Schritten erfolgen kann, beispielsweise durch zwei Umlenkrollen. Durch eine Umlenkrolle nach dem Vorabschnitt kann der Träger erst einmal um 90° umgelenkt werden, sodass nach dieser Umlenkrolle die Transportrichtung vertikal nach unten gerichtet ist. Durch eine weitere Umlenkrolle kann der Träger wieder um weite 90° umgelenkt werden, sodass die Transportrichtung wieder horizontal, aber nun entgegengesetzt zur Transportrichtung im Vorabschnitt verläuft. Die Oberseite des Trägers mit der darauf aufgebrachten Haftklebemasse ist nun nach unten gerichtet. In unmittelbarer Nähe zu dieser weiteren Umlenkrolle kann der Träger mit der Haftklebemasse in das Wasserbecken geführt werden. Der Vorabschnitt ist in diesem Ausführungsbeispiel über dem Hauptabschnitt angeordnet. Eine solche Anordnung führt zu einer kompakt bauenden Vorrichtung, mit der das erfindungsgemäße Verfahren durchgeführt werden kann.

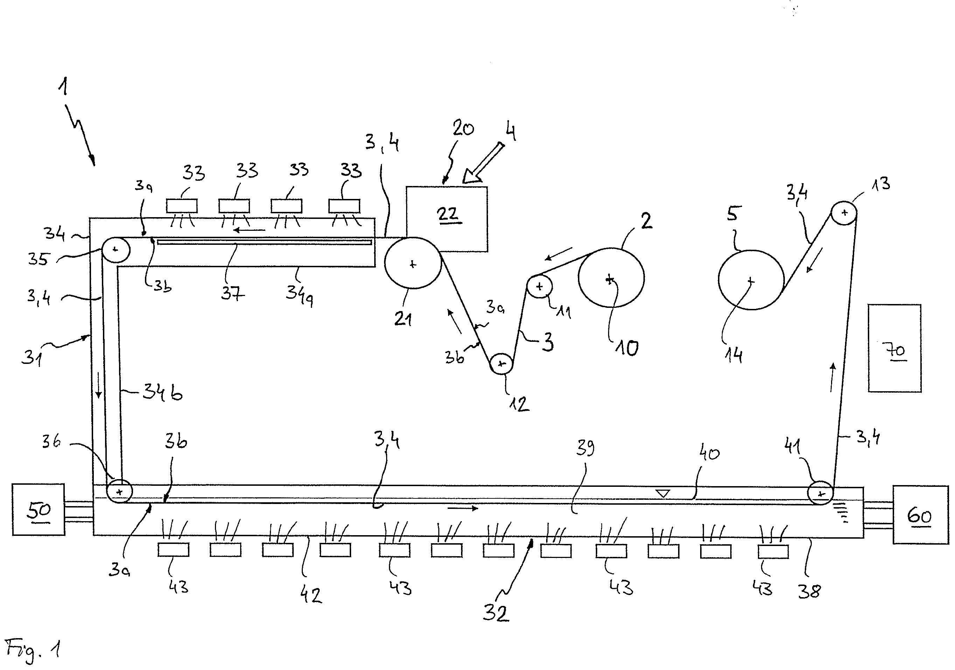

Anhand eines in der Zeichnung dargestellten Ausführungsbeispiels wird die Erfindung näher erläutert. Die einzige Figur (Figur 1) zeigt dabei schematisch eine Vorrichtung zur Durchführung des erfindungsgemäßen Verfahrens. Die Vorrichtung wird in Ihrer Gesamtheit mit 1 bezeichnet.

Die Vorrichtung 1 umfasst eine Aufnahme 10 für eine Abwickelrolle 2, auf der ein bahnförmiger Träger 3 aufgewickelt ist. Bei diesem Träger kann es sich um eine beschichtete oder unbeschichtete Kunststofffolie zum Beispiel aus Polyolefin (PE oder PP) oder TPE, PU etc. handeln. Der Träger kann alternativ aus Papier oder Metall oder einer Kombination verschiedener Materialien sein, das/die mit Wachs, einem Kunststoff, Silikon oder dergleichen beschichtet sein kann. Der Träger kann auch ein Gewebe oder Vlies sein. Soweit eine feste Verbindung zwischen Träger und Haftklebemasse gewünscht ist, kann der Träger auch zusätzlich mit einem Primer beschichtet sein oder seine Oberfläche zwecks besserer Haftung vorbehandelt sein.

Der Träger 3 wird über zwei Umlenkrollen 11, 12 zu einem Auftragswerk 20 geführt, welches eine Auftragswalze 21 und einen Aufnahmetrichter 22 für eine fließfähige Haftklebemasse 4 aufweist. Die Haftklebemasse 4 umfasst Acrylat-Monomere und wenigstens einen Fotoinitiator. Die Haftklebemasse 4 kann auf einem Reaktor stammen, in dem bereits eine gewisse Vorpolymerisation der Acrylat-Monomere (oder vereinfacht gesagt eine Vorpolymerisation der Haftklebemasse) stattgefunden hat. Die Haftklebemasse 4 kann somit auch schon Acrylat-Polymere aufweisen, bevor sie in den Aufnahmetrichter 22 gegeben wird. Das Auftragswerk 20 weist des Weiteren einen Horizontalrakel (nicht dargestellt) auf, der sich parallel zur Achse der Auftragswalze 21 erstreckt. Mit dem Abstand zwischen Horizontalrakel und Auftragswalze bzw. mit dem Abstand zwischen Horizontalrakel und dem Träger 3, der an der Auftragswalze 21 anliegt, wird die Schichtdicke der Haftklebemasse 4 eingestellt. Die Schichtdicke der Haftklebemasse kann nach Verlassen des Auftragswerks 5 bis 5000 µm betragen, vorzugsweise 20 bis 3000 µm. Durch die nachfolgende Behandlung in der Vorrichtung 1 kann sich die Schichtdicke der Haftklebemasse 4 ändern.

Nach Verlassen des Auftragswerks 20 ist der Träger 3 auf einer Oberseite 3a mit der Haftklebemasse 4 versehen. Eine Unterseite 3b des Trägers 3 wird nicht beschichtet. Mit der Unterseite 3b liegt der Träger an der Auftragswalze 4 an.

Auch wenn sich durch die im Folgenden beschriebene Behandlung in der Vorrichtung 1 die Eigenschaften der Haftklebemasse 4 ändern, insbesondere sich die klebende Wirkung der Haftklebemasse erst später einstellt, so wird hier auch der Vorläufer der Haftklebemasse 4 (so auch das Gemisch, welches in den Aufnahmetrichter 22 gefüllt wird) als Haftklebemasse 4 bezeichnet.

Nach dem Auftragswerk 20 wird der Träger 3 mit der darauf aufgebrachten Haftklebemasse in einen Trockenkanal 30 der Vorrichtung 1 geleitet. Der Trockenkanal weist einen Vorabschnitt 31 und einen Hauptanschnitt 32 auf. In dem Vorabschnitt 31 werden der Träger 3 und die darauf aufgetragene Haftklebemasse 4 (im Folgenden: beschichteter Träger 3, 4) einer UV-Strahlung durch mehrere Strahlungsquellen 33 ausgesetzt. Im Vorabschnitt 31 befindet sich dabei der beschichtete Träger 3, 4 in einer Kammer 34, die mit einem Inertgas gefüllt ist, damit bei der UV-Bestrahlung durch die Strahlungsquellen 33 die Haftklebemasse 4 nicht mit Sauerstoff aus der Umgebungsluft in Kontakt kommt. Bei der Bestrahlung durch die Strahlungsquellen 33 verläuft die Transportrichtung des beschichteten Trägers 3, 4 in der Horizontalen, und zwar in der Darstellung der Figur 1 von rechts nach links.

Die UV-Bestrahlung durch die Lichtquellen 33 (in Figur 1 sind vier Lichtquellen dargestellt, welche stellvertretend für eine oder mehrere Lichtquellen stehen sollen) polymerisiert die Haftklebemasse 4, wodurch deren Viskosität erhöht wird. Dadurch ist es möglich, dass nach der UV-Bestrahlung durch die Lichtquellen 33 der beschichtete Träger 3, 4 durch eine Umlenkrolle 35 um 90° umgelenkt werden kann. Die Transportrichtung ist nach erfolgter Umlenkung durch die Umlenkrolle 35 in vertikaler Richtung nach unten gerichtet. Unterhalb der Umlenkrolle 35 ist mit einem gewissen vertikalen Abstand eine weitere Umlenkrolle 35 vorgesehen, durch die der beschichtete Träger wiederum um 90° umgelenkt wird. Die Strecke zwischen der oberen Umlenkrolle 35 und der unteren Umlenkrolle 36 ist im hier gezeigten Ausführungsbeispiel innerhalb der mit Inertgas gefüllten Kammer 34 angeordnet. Die Kammer 34 weist somit einen horizontalen Kammerteil 34a und einen vertikalen Kammerteil 34b auf. Es ist auch möglich, dass nur der horizontale Kammerteil 34a gegeben ist, d. h. die vertikale Strecke zwischen den Umlenkrollen 35, 36 wäre dann nicht durch ein Inertgas geschützt. Der vertikale Abstand zwischen den Umlenkrollen 35, 36 kann 20 bis 250 cm betragen.

In dem horizontalen Kammerteil 34a, in dem die UV-Bestrahlung des beschichteten Trägers 3, 4 stattfindet, ist zwischen der Auftragswalze 21 und der Umlenkrolle 25 eine Kühlplatte 37 angeordnet, welche mit der Unterseite 3b des Trägers 3 in Kontakt steht. Die Unterseite 3b gleitet dabei an der Kühlplatte 37 entlang. Durch die Kühlplatte 37 wird dem beschichteten Träger 3, 4 Wärme entzogen, die bei der Polymerisation durch die UV-Bestrahlung in dem Vorabschnitt 31 entsteht.

Der Hauptabschnitt 32, in den der beschichtete Träger 3, 4 vom Vorabschnitt 31 kommend und nach Passieren der Umlenkrolle 36 gelangt, weist ein flaches Wasserbecken 38 auf, das mit vorzugsweise demineralisiertem Wasser 39 gefüllt ist. Eine Wasseroberfläche des Wassers 39 im Wasserbecken 38 ist mit 40 bezeichnet. Die Transportrichtung des beschichteten Trägers 3, 4 erfolgt im Hauptabschnitt in der Horizontalen, jedoch in der Darstellung der Figur 1 nun von links nach rechts. Die Umlenkrolle 36 und eine weitere Umlenkrolle 41 am Ausgang des Hauptabschnitts 32 sind relativ zur Wasseroberfläche 40 so angeordnet, dass der beschichtete Träger 3, 4 schwimmend bzw. leicht unmittelbar unterhalb der Wasseroberfläche 40 durch das Wasserbecken 38 gezogen wird. Auf alle Fälle befindet sich die Haftklebemasse 4 im Wasser des Wasserbeckens 38. Zu beachten ist, dass durch die zweifache 90°-Umlenkung an den Umlenkrollen 35, 36 die Oberseite 3a des Trägers und die Haftklebemasse 4 nun nach unten gerichtet sind.

Unterhalb eines Bodens 42 des Wasserbeckens 38 sind eine Vielzahl von Strahlungsquellen 43 angeordnet, durch die der beschichtete Träger 3, 4 im Hauptabschnitt 32 einer UV-Bestrahlung ausgesetzt ist. Die Strahlung der Strahlungsquellen erfolgt dabei durch den Boden 42 und durch das Wasser 39 im Wasserbecken 38. Entsprechend muss der Boden 42 aus einem Material wie Plexiglas sein, welches für UV-Strahlen durchlässig ist.

Im hier gezeigten Ausführungsbeispiel sind die Strahlungsquellen 43 außerhalb des Wasserbeckens 38 angeordnet, also unterhalb des Bodens 42. Es ist auch möglich, dass die Strahlungsquellen 43 zumindest teilweise im Wasserbecken 38 angeordnet sind, wodurch der Abstand zwischen beschichtetem Träger 3, 4 und der Strahlungsquelle 43 sehr klein werden kann. Auch ist es möglich, das Wasserbecken nur mit einer sehr kleinen Wassertiefe zu versehen, sodass auch im Fall von außen angeordneten Strahlungsquellen 43 ein geringer Abstand zwischen Strahlungsquelle 43 und beschichteter Träger 3, 4 gewählt werden kann.

In dem Hauptabschnitt 32 erfolgt der größte Teil der Polymerisation. Entsprechend fällt auch hier bei der exothermen Polymerisationsreaktion der größte Anteil der Wärme an, die von der Haftklebemasse 4 durch das Wasser 39 effektiv abgeleitet wird. Schematisch ist eine Kühleinheit 50 in Figur 1 dargestellt, durch die das Wasser 39 im Wasserbecken 38 gekühlt wird. Die Kühleinheit kann einen Wärmetauscher aufweisen, der einerseits von dem Wasser aus dem Wasserbecken und andererseits, vom Wasser aus dem Wasserbecken getrennt, von Kühlwasser durchströmt wird. Somit kann dem Wasser aus dem Wasserbecken bzw. dem Wasser im Wasserbecken so viel Wärme entzogen werden, wie es von dem Haftklebeband (von dem beschichteten Träger) aufnimmt. Durch ein Thermostat der Kühleinheit kann ein gewünschter Sollwert für die Temperatur 39 des Wassers im Wasserbecken 38 eingestellt werden. Bei einem höheren Sollwert wird die Haftklebemasse 4 in dem Wasserbecken 38 weniger stark gekühlt, so dass die Polymerisation auf einem erhöhten Temperaturniveau mit entsprechend großen Polymerisationsraten erfolgt. Wird hingegen zum Schutz des Trägermaterials eine geringere Temperatur der Haftklebemasse 4 und des Trägers 3 gewünscht, kann ein kleinerer Sollwert für die Temperatur eingestellt werden. Ein bevorzugter Bereich für den Sollwert der Temperatur des Wassers 39 im Wasserbecken 38 beträgt 10 bis 75°C.

Ebenfalls nur schematisch dargestellt ist eine Filtereinheit 60, mit der das Wasser 39 über eine Umwälzpumpe gefiltert wird. Die Filtereinheit 60 kann dabei verschiedene Filter wie einen Aktivkohlefilter oder einen Schwebepartikelfilter aufweisen. Zudem können der Filtereinheit 60 weitere Mittel zugeordnet sein, durch die das Wasser 39 konditioniert wird, beispielsweise durch die Zusetzung von Bioziden, Katalysatoren, Synergisten, einem pH-Puffer oder anderen funktionalen Zusätzen, die die Polymerisation an der Kontaktfläche zwischen Waser und der Haftklebemasse beeinflussen können.

In dem Wasserbad 38 wird die Haftklebemasse 4 vollständig bzw. bis zu dem gewünschten Grad polymerisiert. Neben der Kühlung der Haftklebemasse 4 und des Trägers 3 übernimmt das Wasser 39 auch die wichtige Funktion, die Haftklebemasse 4 bei der Polymerisation vollständig vom Luftsauerstoff zu schützen. Eine Inhibierung durch Inertgas ist in dem Hauptabschnitt 32 nicht notwendig.

Bei der Umlenkrolle 41 verlässt der beschichtete Träger 3, 4 das Wasserbecken 38 und wird an einer Trocknungseinheit 70 vorbeigeführt. Durch die Trocknungseinheit 70 werden anhaftende Wassertropfen aus dem Wasserbecken 38 bzw. Wasser oder Feuchtigkeit von dem beschichteten Träger 3, 4 getrennt. Die Trocknungseinheit 70 kann ein Gebläse mit Kalt- oder Heißluft und/oder einen Infrarot-Strahler aufweisen, durch die die Wassertropfen verdunsten oder weggeblasen werden. Nach Umlauf einer weiteren Umlenkrolle 13 kann der beschichtete Träger 3, 4 auf einer Aufwickelrolle 5 aufgewickelt werden, die auf einer Aufnahme 14 der Vorrichtung 1 drehend gelagert ist.

Durch das Wasserbad 38 und die Bestrahlung durch das Wasser 39, das direkten Kontakt mit der Haftklebemasse 4 hat, findet eine effektive Kühlung statt und es ist gleichzeitig ein effektiver Schutz gegen Luftsauerstoff gegeben. Durch die besondere Führung oder den besonderen Transport des beschichteten Trägers 3, 4, der zunächst mit der beschichteten Oberseite 3a nach oben gerichtet eine UV-Vorbestrahlung in Inertgas-Umgebung und dann, mit der Oberseite 3b nach unten gerichtet, im Wasserbad eine UV-Hauptbestrahlung erfährt, ist ein kompakter Aufbau der Vorrichtung 1 möglich. Aufgrund der effektiven Kühlung durch das Wasser 39 können bei der Herstellung des Haftklebebands auch temperatursensible Trägermaterialen für den Träger eingesetzt werden. Der Einsatz von Prozessträgern oder -linern nur für die Herstellung des Haftklebebands ist nicht zwingend erforderlich.

## Patentansprüche

1. Verfahren zum Herstellen eines Haftklebebands, mit folgenden Schritten:
- Bereitstellung einer Haftklebemasse (4), die durch elektromagnetische Strahlung polymerisierbare Acrylat-Monomere und einen Fotoinitiator aufweist;
- Bereitstellung eines bandförmigen Trägers (3) mit einer Oberseite (3a) und einer Unterseite (3b);
- Auftragen der Haftklebemasse (4) auf zumindest die Oberseite (3a) des Trägers (3), wobei vor dem Auftragen der Haftklebemasse auf den Träger eine Vorpolymerisation stattgefunden hat, sodass die Haftklebemasse auch Acrylat-Polymere aufweist; und
- Transportieren des Trägers (3) mit der aufgetragenen Haftklebemasse (4) durch einen Trockenkanal (30), in dem die aufgetragene Haftklebemasse (4) einer elektromagnetischen Strahlung ausgesetzt wird und bei der Bestrahlung polymerisiert,
**dadurch gekennzeichnet, dass**
der Trockenkanal (30) einen Hauptabschnitt (32) umfasst, der ein mit Wasser (39) gefülltes Wasserbecken (38) und wenigstens eine Strahlungsquelle (43) aufweist, wobei der Träger (3) durch das Wasserbecken geführt wird, so dass die auf der Oberseite (3a) des Trägers (3) aufgetragene Haftklebemasse (4) während der Bestrahlung direkten Kontakt zu dem Wasser (39) hat, wobei die Strahlung der Strahlungsquelle (43) durch das Wasser (39) im Wasserbecken (38) erfolgt, und wobei die Abfuhr der bei der Polymerisation entstehenden Wärme durch das Wasser erfolgt.

2. Verfahren nach Anspruch 1, **dadurch gekennzeichnet, dass** im Hauptabschnitt (32) der Träger (3) entlang einer Wasseroberfläche (40) des Wasserbeckens (38) geführt wird, wobei die Oberseite (3a) mit der aufgetragenen Haftklebemasse (4) nach unten gerichtet ist.

3. Verfahren nach Anspruch 1 oder 2, **dadurch gekennzeichnet, dass** die Strahlungsquelle (43) innerhalb des Wasserbeckens (38) angeordnet ist.

4. Verfahren nach einem der Ansprüche 1 bis 3, **dadurch gekennzeichnet, dass** nach dem Hauptabschnitt (32) eine Trocknungseinheit (70) vorgesehen ist, durch die der bandförmige Träger (3) und die Haftklebemasse (4) von anhaftendem Restwasser getrennt wird.

5. Verfahren nach einem der Ansprüche 1 bis 4, **dadurch gekennzeichnet, dass** eine Temperatur des Wassers (39) im Wasserbecken (38) geregelt wird, wobei ein Sollwert des Wassers (39) 0 bis 90°C, vorzugsweise 10 bis 75°C beträgt.

6. Verfahren nach einem der Ansprüche 1 bis 5, dass als Wasser (39) im Wasserbad (38) demineralisiertes Wasser verwendet wird.

7. Verfahren nach einem der Ansprüche 1 bis 6, **dadurch gekennzeichnet, dass** ein pH-Wert des Wassers (39) im Wasserbecken (38) überprüft und geregelt wird und/oder das Wasser (39) gefiltert wird.

8. Verfahren nach einem der Ansprüche 1 bis 7, **dadurch gekennzeichnet, dass** der Träger (3) mit der aufgetragenen Haftklebemasse (4) durch einen dem Hauptabschnitt (32) vorgelagerten Vorabschnitt (31) des Trockenkanals (30) transportiert wird, in dem der Träger (3) mit der aufgetragenen Haftklebemasse (4) einer Strahlung wenigstens einer weiteren Strahlungsquelle (33) ausgesetzt wird.

9. Verfahren nach Anspruch 8, **dadurch gekennzeichnet, dass** die Haftklebemasse (4) unmittelbar vor dem Transport durch den Vorabschnitt (31) auf den Träger (3) aufgetragen wird.

10. Verfahren nach Anspruch 8 oder 9, **dadurch gekennzeichnet, dass** eine Transportrichtung des Trägers (3) durch den Hauptabschnitt (32) und eine Transportrichtung des Trägers (3) durch den Vorabschnitt (31) im Wesentlichen entgegengesetzt sind.

11. Verfahren nach einem der Ansprüche 8 bis 10, **dadurch gekennzeichnet, dass** ein Verhältnis der in dem Hauptabschnitt (32) eingesetzten Strahlungsenergie zu der in dem Vorabschnitt (31) eingesetzten Strahlungsenergie größer als 1, vorzugsweise größer als 2 oder größer als 4 ist.

## Claims

1. A method for producing a pressure-sensitive adhesive tape, comprising the following steps:
- providing a pressure-sensitive adhesive composition (4) that contains acrylate monomers polymerizable by electromagnetic radiation and a photoinitiator;
- providing a tape-shaped carrier (3) with an upper side (3a) and a lower side (3b);
- applying the pressure-sensitive adhesive composition (4) to at least the upper side (3a) of the carrier (3), wherein pre-polymerization has taken place before the application of the adhesive composition to the carrier, such that the adhesive composition also contains acrylate polymers; and
- transporting the carrier (3) with the applied pressure-sensitive adhesive composition (4) through a drying channel (30), in which the applied pressure-sensitive adhesive composition (4) is exposed to electromagnetic radiation and polymerizes upon irradiation,
**characterized in that**
the drying channel (30) comprises a main section (32) that includes a water basin (38) filled with water (39) and at least one radiation source (43), wherein the carrier (3) is guided through the water basin in such a manner that the pressure-sensitive adhesive composition (4) applied to the upper side (3a) of the carrier (3) is in direct contact with the water (39) during irradiation, wherein the radiation from the radiation source (43) takes place through the water (39) in the water basin (38), and wherein the heat generated during polymerization is dissipated by the water.

2. The method according to claim 1, **characterized in that** in the main section (32), the carrier (3) is guided along a water surface (40) of the water basin (38), wherein the upper side (3a) with the applied pressure-sensitive adhesive composition (4) faces downwards.

3. The method according to claim 1 or 2, **characterized in that** the radiation source (43) is arranged within the water basin (38).

4. The method according to any one of claims 1 to 3, **characterized in that** a drying unit (70) is provided after the main section (32), by which drying unit the tape-shaped carrier (3) and the adhesive composition (4) are separated from adhering residual water.

5. The method according to any one of claims 1 to 4, **characterized in that** the temperature of the water (39) in the water basin (38) is controlled, wherein a setpoint temperature of the water (39) ranges from 0 to 90 °C, preferably from 10 to 75 °C.

6. The method according to any one of claims 1 to 5, **characterized in that** demineralized water is used as the water (39) in the water basin (38).

7. The method according to any one of claims 1 to 6, **characterized in that** the pH value of the water (39) in the water basin (38) is monitored and controlled and/or the water (39) is filtered.

8. The method according to any one of claims 1 to 7, **characterized in that** the carrier (3) with the applied pressure-sensitive adhesive composition (4) is transported through a pre-section (31) of the drying channel (30) upstream of the main section (32), in which the carrier (3) with the applied pressure-sensitive adhesive composition (4) is exposed to radiation from at least one additional radiation source (33).

9. The method according to claim 8, **characterized in that** the pressure-sensitive adhesive composition (4) is applied to the carrier (3) immediately before transportation through the pre-section (31).

10. The method according to claim 8 or 9, **characterized in that** the transport direction of the carrier (3) through the main section (32) and the transport direction of the carrier (3) through the pre-section (31) are substantially opposite.

11. The method according to any one of claims 8 to 10, **characterized in that** the ratio of the radiation energy used in the main section (32) to the radiation energy used in the pre-section (31) is greater than 1, preferably greater than 2 or greater than 4.

## Revendications

1. Procédé de fabrication d'un ruban adhésif sensible à la pression, comprenant les étapes suivantes consistant à:
- fournir une masse adhésive sensible à la pression (4) qui présente des monomères d'acrylate polymérisables par rayonnement électromagnétique et un photo-initiateur;
- fournir un support en forme de bande (3) ayant une face supérieure (3a) et une face inférieure (3b);
- appliquer la masse adhésive sensible à la pression (4) au moins sur la face supérieure (3a) du support (3), dans lequel une prépolymérisation a eu lieu avant que la masse adhésive sensible à la pression soit appliquée sur le support, de sorte que la masse adhésive sensible à la pression comprend également des polymères d'acrylate; et
- transporter le support (3) avec la masse adhésive sensible à la pression appliquée (4) à travers un canal de séchage (30) dans lequel la masse adhésive sensible à la pression appliquée (4) est exposée à un rayonnement électromagnétique et polymérise pendant l'irradiation,
**caractérisé par le fait que**
le canal de séchage (30) comprend une section principale (32) qui comprend un bassin d'eau (38) rempli d'eau (39) et au moins une source de rayonnement (43), dans lequel le support (3) est guidé à travers le bassin d'eau de telle sorte que la masse adhésive sensible à la pression (4) appliquée sur la face supérieure (3a) du support (3) soit en contact direct avec l'eau (39) pendant l'irradiation, dans lequel le rayonnement de la source de rayonnement (43) se produit à travers l'eau (39) dans le bassin d'eau (38), et dans lequel la chaleur générée pendant la polymérisation est dissipée à travers l'eau.

2. Procédé selon la revendication 1, **caractérisé par le fait que**, dans la section principale (32), le support (3) est guidé le long d'une surface d'eau (40) du bassin d'eau (38), dans lequel la face supérieure (3a) avec la masse adhésive sensible à la pression appliquée (4) est dirigée vers le bas.

3. Procédé selon la revendication 1 ou 2, **caractérisé par le fait que** la source de rayonnement (43) est disposée à l'intérieur du bassin d'eau (38).

4. Procédé selon l'une quelconque des revendications 1 à 3, **caractérisé par le fait qu'**une unité de séchage (70) est prévue en aval de la section principale (32), au moyen de laquelle le support en forme de bande (3) et la masse adhésive sensible à la pression (4) est séparé(e) d'eau résiduelle adhérente.

5. Procédé selon l'une quelconque des revendications 1 à 4, **caractérisé par le fait qu'**une température de l'eau (39) dans le bassin d'eau (38) est régulée, dans lequel une valeur cible de l'eau (39) est comprise entre 0 et 90 °C, de préférence entre 10 et 75 °C.

6. Procédé selon l'une quelconque des revendications 1 à 5, **caractérisé par le fait que** l'on utilise de l'eau déminéralisée comme eau (39) dans le bain d'eau (38).

7. Procédé selon l'une quelconque des revendications 1 à 6, **caractérisé par le fait qu'**une valeur de pH de l'eau (39) dans le bassin d'eau (38) est contrôlée et régulée et/ou que l'eau (39) est filtrée.

8. Procédé selon l'une quelconque des revendications 1 à 7, **caractérisé par le fait que** le support (3) avec la masse adhésive sensible à la pression (4) appliquée est transporté à travers une section préliminaire (31) du canal de séchage (30), qui est située en amont de la section principale (32) et dans laquelle le support (3) avec la masse adhésive sensible à la pression (4) appliquée est exposée à un rayonnement d'au moins une autre source de rayonnement (33).

9. Procédé selon la revendication 8, **caractérisé par le fait que** la masse adhésive sensible à la pression (4) est appliquée sur le support (3) immédiatement avant le transport à travers la section préliminaire (31).

10. Procédé selon la revendication 8 ou 9, **caractérisé par le fait qu'**une direction de transport du support (3) à travers la section principale (32) et une direction de transport du support (3) à travers la section préliminaire (31) sont pour l'essentiel opposées.

11. Procédé selon l'une quelconque des revendications 8 à 10, **caractérisé par le fait qu'**un rapport de l'énergie de rayonnement utilisée dans la section principale (32) à l'énergie de rayonnement utilisée dans la section préliminaire (31) est supérieur à 1, de préférence supérieur à 2 ou supérieur à 4.
